# FASCICULE DE BREVET EUROPEEN

(11) **EP 3 864 314 B1**
(45) Date de publication et mention de la délivrance du brevet: **20.11.2024**
(21) Numéro de dépôt: 19829289.8
(22) Date de dépôt: 20.11.2019
(51) Int. Cl.: F16D 55/226, F16D 65/18, F16D 65/095, F16D 65/097, F16D 65/092

(54) **FREIN À DISQUE OFFRANT UNE RÉPARTITION EQUILIBRÉE DES EFFORTS DE POUSSÉE APPLIQUÉS PAR UN PISTON SUR AU MOINS UNE PLAQUETTE DE FREIN**
SCHEIBENBREMSE MIT AUSGEGLICHENER VERTEILUNG DER DURCH EINEN KOLBEN AUF MINDESTENS EINEN BREMSBELAG AUFGEBRACHTEN SCHUBKRÄFTE
DISC BRAKE OFFERING A BALANCED DISTRIBUTION OF THRUST FORCES APPLIED BY A PISTON ONTO AT LEAST ONE BRAKE PAD

(30) Priorité: 21.11.2018 FR 1871685
(43) Date de publication de la demande: 18.08.2021
(73) Titulaire: Hitachi Astemo France, 93700 Drancy (FR)
(72) Inventeur: BOURLON, Philippe, 77230 DAMMARTIN EN GOELE (FR); PASQUET, Thierry, 94700 VINCENNES (FR)
(74) Mandataire: Brevalex
(86) Numéro de dépôt international: PCT/FR2019/052762
(87) Numéro de publication internationale: WO 2020/104752

(56) Documents cités:
- DE-U1- 202016 003 835
- US-A1- 2018 298 963

## Description

### DOMAINE TECHNIQUE ET ÉTAT DE LA TECHNIQUE ANTÉRIEURE

La présente invention se rapporte au domaine des freins à disque, notamment les freins à disque à actionnement au moins en partie électrique.

Un exemple de frein à disque comporte une chape destinée à être fixée à un porte-fusée d'un véhicule automobile, un étrier monté flottant par rapport à la chape, deux plaquettes de frein destinées à venir en contact avec un disque de frein fixé en rotation sur une roue. L'étrier comporte un piston qui peut être déplacé sous l'action d'un fluide sous pression pour appliquer une des plaquettes contre une face du disque de frein. Par réaction, l'étrier coulisse est applique l'autre plaquette contre l'autre face du disque de frein.

Lorsque la pression est relâchée, le piston recule et permet à la plaquette en contact avec celui-ci de s'écarter du disque de frein, la force de freinage s'annule. L'autre plaquette s'écarte également de l'autre face du disque.

Dans l'industrie automobile, le freinage de stationnement a pour fonction d'immobiliser le véhicule à l'arrêt afin de l'empêcher de bouger de façon inopinée. Il satisfait en outre à la disposition légale exigeant un deuxième système de freinage indépendant du système de freinage de service, généralement hydraulique.

Il existe également des freins à disque munis d'un frein de stationnement ou de parking électromécanique, les freinages en phase de roulage étant obtenus par actionnement hydraulique, comportant un dispositif qui sous l'action d'un moteur électrique permet de déplacer le piston afin d'appliquer les plaquettes de frein contre le disque. Le dispositif est par exemple à vis sans fin et est logé dans le piston. Un bouton situé dans l'habitacle permet l'activation du frein de parking.

Il existe également des freins à disque à actionnement entièrement électromécanique. Un tel frein est par exemple décrit dans le document FR 3024516.

Il est souhaitable de disposer d'un frein à disque dans lequel l'effort de poussée du piston sur la plaquette de frein est réparti de manière plus équilibrée.

Par ailleurs, dans des applications à des véhicules de grande taille et ou de grande puissance, on prévoit d'utiliser des freins à disque bi-piston, i.e. comportant deux pistons qui sont actionnés simultanément pour appliquer les plaquettes contre le disque. Un tel frein à disque permet de générer une puissance de freinage importante.

Ce type de frein à disque est par exemple mis en oeuvre dans les voitures dites sportives de grosse cylindrée ou dans les véhicules utilitaires sports ou SUV (Sport utility vehicle en terminologie anglo-saxonne).

Lorsque l'on souhaite intégrer une fonction frein de parking électromécanique à un frein à disque bi-piston, un moteur et une chaîne de force pour chaque piston est requise. Or la mise en oeuvre de deux moteurs augmente l'encombrement général du frein ainsi que sa masse. En outre une telle intégration est complexe. DE 20 2016 003835 U1 divulgue un frein à disque connu de l'état de la technique, comprenant une plaque de pression entre un piston et un support de garniture de freinage.

US 2018/298963 A1 divulgue un frein à disque connu de l'état de la technique comprenant une semelle entre un piston et une plaquette de frein.

### EXPOSÉ DE L'INVENTION

C'est par conséquent un but de la présente invention d'offrir un frein à disque dans lequel l'effort de poussée du piston sur la plaquette de frein est réparti de manière plus équilibrée.

Un but supplémentaire de la présente invention est d'offrir un frein à disque capable de développer une grande puissance de freinage avec une masse et/ou un encombrement réduits par rapport à des frein à disque de l'état de la technique développant une puissance de freinage équivalente.

C'est également un but de la présente invention d'offrir un frein à disque électrique présentant un même encombrement qu'un frein hydraulique notamment un frein hydraulique bi-piston.

Le but énoncé ci-dessus est atteint par un frein à disque comportant un étrier, une chape, au moins une plaquette de frein, au moins un piston et un actionneur électromécanique configuré pour déplacer le piston de sorte à appliquer la plaquette de frein contre le disque. Le frein à disque comporte également un dispositif intercalaire selon la revendication 1 monté entre le nez du piston et la plaquette permettant de répartir l'effort de poussée dudit piston de manière équilibrée sur la plaquette de freinage.

Pour cela le dispositif intercalaire est de type palonnier assurant une répartition équilibrée de la force de poussée du piston dans au moins deux zones de la plaquette.

Par exemple, la plaquette de frein est celle d'un frein à disque bi-piston et les zones sont celles sur lesquelles les deux pistons d'un frein à disque bi-piston classique viendraient normalement appuyer sur la plaquette. Dans cet exemple, le dispositif intercalaire simule l'application des efforts de poussée exercés par au moins deux pistons, de sorte que la plaquette voit l'appui d'au moins deux pistons.

Ainsi l'invention permet d'exercer les efforts de poussée d'un frein bi-piston à partir d'un seul piston avantageusement entraînée par un actionneur électrique unique sans modifier la tenue mécanique du frein, car la partie qui supporte les deux pistons dans un frein bi-piston ne participe pas à la tenue mécanique du frein. En outre le gain de masse est important car cette partie est généralement réalisée en fonte.

De manière très avantageuse, le dispositif intercalaire à palonnier comporte plusieurs pièces articulées entre elles par des liaisons rotules. En outre le dispositif intercalaire est avantageusement solidarisé au piston par une liaison rotule.

En outre il est avantageusement prévu que le dispositif intercalaire soit guidé dans la chape, comme la plaque de frein, pour supporter le couple de freinage et pour que ce couple ne s'applique pas sur le piston au centre de poussée. De manière préférée il comporte deux oreilles montées dans les gorges guidant la plaquette de frein.

Le dispositif intercalaire comportant des moyens de solidarisation avec le piston dans la direction axiale. De manière très avantageuse, dans le cas d'un frein à disque à étrier coulissant, les moyens de solidarisation sont tels qu'ils sont activés automatiquement lorsque l'étrier est refermé sur les plaquettes.

Le frein à disque comporte avantageusement un actionneur électromécanique d'un frein monopiston, ce qui permet de réaliser un frein à disque bi-piston à actionnement électromécanique sans avoir à redévelopper un actionneur électromécanique spécifique au déplacement de deux pistons. En outre la masse et l'encombrement sont réduits.

Selon l'invention, le dispositif intercalaire est rapporté entre le piston et la plaquette de frein intérieure.

Dans un exemple, le dispositif intercalaire est fixée à la plaquette de frein intérieure, par exemple il s'agit d'une seule pièce, le dispositif peut alors être remplacé avec la plaquette usée.

La présente invention a alors pour objet un frein à disque comportant une chape, au moins une première plaquette de frein montée coulissante dans la chape, ladite première plaquette de frein comportant un support de plaquette et un matériau de friction, un étrier comportant au moins un piston monté coulissant dans l'étrier de sorte à déplacer la première plaquette de frein par rapport à la chape, au moins un actionneur configuré pour déplacer axialement le piston, et un dispositif intercalaire selon la revendication 1 interposé entre le piston et la première plaquette de frein formant un palonnier de sorte à répartir l'effort de poussée exercé par le piston sur au moins deux zones de la première plaquette de frein, au moins en partie distinctes de la projection du piston sur la première plaquette de frein.

Le dispositif intercalaire comporte une première pièce et au moins deux deuxièmes pièces et une liaison rotule entre la première pièce et chaque deuxième pièce.

Dans le cas où la chape comporte au moins deux rainures de guidage de deux oreilles de ladite première plaquette de frein, les deuxièmes pièces du dispositif intercalaire comportent avantageusement chacune une branche, dont une extrémité libre est montée dans une desdites rainures.

De préférence, le frein comporte une liaison rotule ente la première pièce et le piston. Par exemple, la liaison rotule ente la première pièce et le piston comporte un premier élément solidaire du piston et un deuxième élément solidaire de la première pièce, le premier élément ou le deuxième élément pénétrant dans le deuxième élément ou le premier élément respectivement, de sorte à former une liaison rotule entre le piston et le dispositif intercalaire et assurer une solidarisation axiale entre le piston et le dispositif intercalaire au moins lorsque le piston rentre dans l'étrier.

Les au moins deux zones sont de préférence décalées l'une par rapport à l'autre transversalement.

Par exemple, les au moins deux zones ont une forme circulaire. Les liaisons rotules sont par exemple agencées de sorte que leur projection sur la première plaquette de frein soit au centre desdites zones.

Le frein à disque peut comporter une deuxième plaquette de frein, une première colonnette et une deuxième colonnette permettant un coulissement entre l'étrier et la chape, au moins la deuxième colonnette permettant la rotation de l'étrier autour de la première colonnette. L'étrier peut également comporte une voûte et un nez destiné à appliquer un effort sur la deuxième plaquette de frein.

Selon une caractéristique additionnelle, l'un des premier et deuxième éléments comporte un logement s'ouvrant vers la voûte de l'étrier et une fenêtre s'ouvrant vers le deuxième élément ou le premier élément respectivement, et le deuxième ou le premier élément comporte une tête et une tige, la tête étant dimensionnée pour pénétrer dans le logement, et pour former une butée axiale entre le piston et le dispositif intercalaire.

Avantageusement, le dispositif intercalaire est fabriqué dans le même matériau que le piston.

Dans un exemple de réalisation, l'étrier comporte un piston et un actionneur dudit piston et la chape et la première plaquette de frein ont les dimensions d'une plaquette de frein d'un frein à disque bi-piston.

Dans un exemple avantageux, l'actionneur est un actionneur électromécanique.

La présente invention a également pour objet un dispositif intercalaire destiné à être interposé entre un piston d'un frein à disque et un support de plaquette de frein intérieure, comportant une première pièce et au moins deux deuxièmes pièces, une liaison rotule entre la première pièce et chaque deuxième pièce. Ladite première pièce est configurée pour être solidarisée au piston par une liaison rotule et lesdites deuxièmes pièces sont destinées à venir en appui contre un support de plaquette d'une plaquette de frein.

De préférence, chaque deuxième pièce comporte une surface pour transmettre un effort de poussée au support de plaquette et une portion destinée à coopérer avec la chape pour assurer son guidage dans la chape.

La présente invention a également pour objet une plaquette de frein comportant un support de plaquette et un matériau de friction et un dispositif intercalaire selon l'invention, fixé à une face du support de plaquette opposée à celle portant le matériau de friction.

La présente invention a également pour objet un procédé de fabrication d'un frein à disque à étrier coulissant selon la revendication 14, le procédé comportant :
- la fabrication d'un étrier comportant un corps comprenant un logement pour un piston et un actionneur électromécanique et une voûte d'un frein à disque bi-piston,
- la fabrication d'un piston muni d'un élément de connexion,
- le montage dudit piston dans le logement du corps d'étrier,
- la fabrication d'une chape d'un frein bi-piston,
- l'assemblage de l'étrier et de la chape en montant une colonnette entre la chape et l'étrier,
- la mise en position relevée de l'étrier,
- le montage des plaquettes de frein intérieur et extérieur d'un frein bi-piston dans la chape,
- la fabrication d'un dispositif intercalaire,
- le montage du dispositif intercalaire contre le support de plaquette de la plaquette de frein intérieure,
- le pivotement de l'étrier vers la chape, l'élément de connexion du piston coopérant avec la première pièce du dispositif intercalaire,
- la mise en place de la deuxième colonnette entre la chape et l'étrier.

### BRÈVE DESCRIPTION DES DESSINS

La présente invention sera mieux comprise sur la base de la description qui va suivre et des dessins en annexe sur lesquels :
- les figures 1 à 3 sont des vues en perspective d'un exemple de frein à disque selon l'invention dans différentes positions de l'étrier, entre une position ouverte et une position fermée,
- la figure 4 est une vue en perspective de la chape portant les plaquettes de frein et le dispositif intercalaire du frein des figures 1 à 3,
- la figure 5 est une vue en perspective de la chape et du dispositif intercalaire sans les plaquettes de frein,
- les figures 6 et 7 sont des vues en perspective du dispositif intercalaire avec le piston des figures 1 à 3.

### EXPOSÉ DÉTAILLÉ DE MODES DE RÉALISATION PARTICULIERS

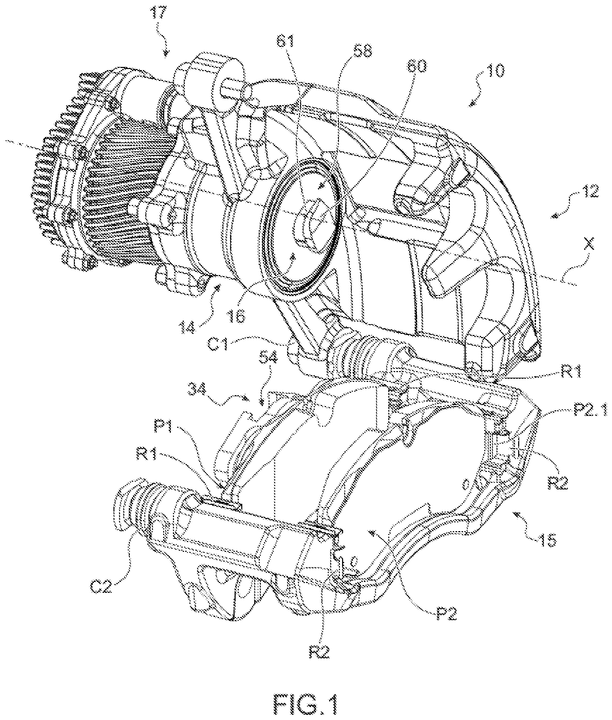

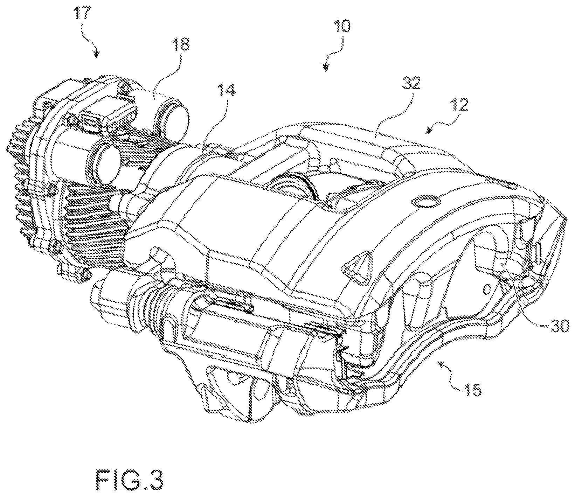

Sur les figures 1 à 3, on peut voir un exemple de frein à disque selon l'invention. Dans cet exemple, le frein est à actionnement entièrement électromécanique, l'actionneur électromécanique actionné par un moteur électrique assure à la fois le freinage en phase de roulage (frein de service et le freinage en stationnement (frein de parking). Comme nous le verrons en variante, le frein à disque comporte un actionneur hydraulique.

Dans la description qui va suivre, des éléments et composants identiques, analogues, ou similaires seront désignés par les mêmes références.

La direction axiale est parallèle à l'axe du disque et la direction transversale est orthogonale à l'axe du disque.

La direction amont aval est considérée dans le sens de déplacement axial du piston en phase de freinage.

Le frein à disque 10 comporte un étrier 12 comportant un boîtier arrière 14 dans lequel un piston de frein 16 est monté coulissant axialement selon l'axe X. Le frein à disque comporte également une chape 15 destinée à être fixée sur le porte-fusée d'une roue. La chape 15 supporte les patins de frein ou plaquettes de frein P1 et P2.

Le frein à disque comporte deux colonnettes C1 et C2 permettant le coulissement de l'étrier par rapport à la chape. L'une C2 de colonnettes permet d'ouvrir le frein en faisant pivoter l'étrier autour de l'autre colonnette C1 et de remplacer les plaquettes de frein.

Les plaquettes de frein comportent des oreilles, seules les oreilles P2.1, P2.1 de la plaque extérieure P2 sont visibles. Les oreilles s'étendent latéralement vers l'extérieur et coopèrent avec des gorges 19 ou rainures portées par la chape de sorte à assurer le guidage axial des plaquettes par rapport au disque. Dans l'exemple représenté et de manière avantageuse, des ressorts R1, R2 sont montés dans les gorges et reçoivent les oreilles. Les ressorts facilitent le coulissement des plaquettes et peuvent assurer une fonction de guidage axial et de rappel, voire une fonction de rattrapage de jeu.

Le frein à disque 10 comporte, à l'arrière, un groupe motoréducteur ou actionneur électromécanique 17 dont on a représenté un boîtier 18 qui loge un moteur électrique et un mécanisme réducteur, par exemple à engrenages à train épicycloïdal. Le boîtier 18 est rapporté et fixé sur une face arrière de l'étrier 12 contre laquelle le boîtier 18 est fixé, la fixation étant ici assurée pas des vis 22. Le boîtier arrière 14 de l'étrier 12 délimite une cavité dans laquelle le piston 16 est monté coulissant axialement de manière étanche dans les deux sens, selon l'axe X. Le piston de frein 16 est une pièce en forme générale de disque dont une face aval 26 est destinée à coopérer avec un patin de frein à disque associé P1, dit patin intérieur ou plaquette intérieure.

Le motoréducteur est par exemple proche ou similaire au motoréducteur décrit dans le document FR3024516.

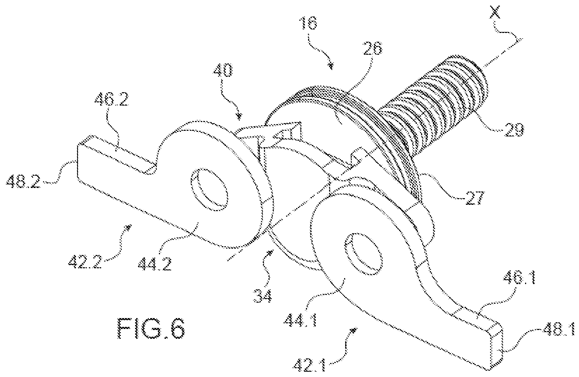

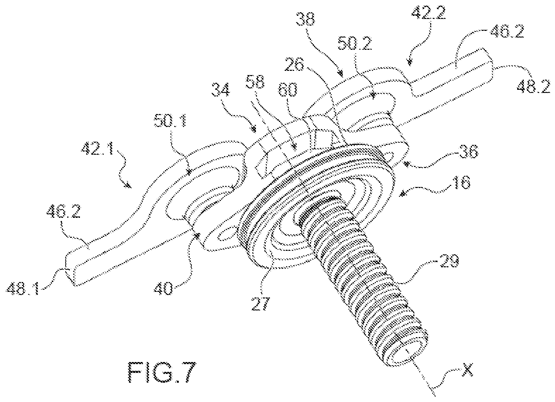

Par exemple, le piston comporte en saillie de sa face amont 27 opposée à la face 26 une vis 29 (figure 6 et 7) destinée à coopérer avec un écrou (non représenté) destiné à être entraîné en rotation par un moteur électrique.

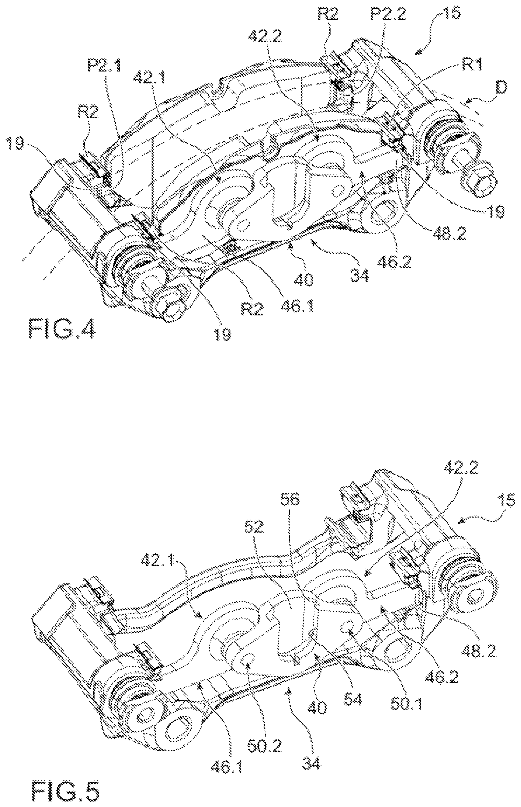

Dans l'exemple représenté, l'étrier 12 est de type coulissant. L'étrier comporte un nez d'étrier 30 raccordé au boîtier 18 par une voûte 32 est destinée à chevaucher le disque de frein D (représenté en pointillés sur la figure 4). Le nez 30 est situé axialement en aval de la plaquette extérieure en considérant le sens de déplacement de la plaquette intérieure P1. Le nez 30 est destiné à venir exercer un effort de poussée sur la plaquette extérieure P2 en direction du disque de la manière suivante.

La plaquette intérieure P1 est déplacée par le piston 16 pour venir en contact avec une face du disque et la plaquette extérieure P2 est déplacée en direction de l'autre face du disque par déplacement de l'étrier par réaction, du fait du contact entre la plaquette intérieure et le disque de frein.

Dans cet exemple, les dimensions du disque D destiné à être freiné par le frein à disque, des plaquettes de frein P1, P2, de la chape 15 supportant les plaquettes et au moins de la voûte 32 et du nez d'étrier 30 sont celles d'un frein à disque bi-piston, i.e. d'un frein à disque comportant un boîtier dans lequel sont habituellement montés deux pistons destinés à venir en appui contre la plaquette intérieure.

Or, comme décrit ci-dessus, le frein à disque 10 ne comporte qu'un piston. Afin d'assurer l'application d'efforts de poussée répartis de manière équilibrée sur la plaquette intérieure P1 avec un seul piston, et par suite la stabilité du patin lorsque celui-ci est entraîné par friction par la rotation du disque, le frein à disque comporte un dispositif intercalaire 34 assurant une distribution des efforts sur la plaquette intérieure, qui serait celle obtenue au moyen de deux pistons.

Le dispositif intercalaire 34 est visible plus en détail sur la figures 4 à 7.

Dans l'exemple représenté, le dispositif intercalaire 34 comporte un côté amont 36 coopérant avec le piston et un côté aval 38 coopérant avec la face axiale arrière de la plaquette de frein intérieure P1.

Le côté amont 36 reçoit la poussée exercée par le piston et le côté aval assure une distribution équilibrée de la poussée sur la plaquette de frein. Le dispositif intercalaire comporte une première pièce 40 du côté amont 36 en contact avec le nez du piston et deux deuxièmes pièces 42.1, 42.2 du côté aval coopérant avec la plaquette de frein.

Dans l'exemple représenté, chaque deuxième pièce 42.1, 42.2 comporte une première parties 44.1, 44.2 sensiblement en forme de disque et une deuxième partie formant une branche 46.1, 46.2 s'étendant sensiblement tangentiellement. Les deux branches 46.1, 46.1 sont orientées de sorte à s'étendre dans un plan orthogonal à l'axe X latéralement vers l'extérieur d'une partie 44.1, 44.2 respectivement.

Les extrémités latérales libres 48.1, 48.2 des deux branches 46.1, 46.2 sont destinées à loger dans les rainures de la chape et assurer une reprise de l'effort radial.

Chaque partie 44.1, 44.2 est en appui contre la face arrière de la plaquette en une zone correspondant à celle contre laquelle serait en appui un des pistons d'un frein à disque bi-piston. La forme et les dimensions de disques des parties 44.1, 44.2 correspondent au contour extérieur de la surface de contact entre chaque piston et la plaquette dans un frein bi-piston.

La première pièce 40 est connectée mécaniquement avec les deuxièmes pièces 42.1, 42.2 par deux liaisons rotules 50.1, 50.2 situées sensiblement au centre de chacune des parties 44.1, 44.2. La première pièce reçoit un effort de poussée par le piston le long de l'axe X de coulissement du piston, qui est distribué sur les deux parties 44.1, 44.2 de la deuxième pièce 42 de manière équilibrée. En effet la première pièce, la deuxième pièce 42 et les deux liaisons rotule forment un palonnier. Ainsi l'effort reçu par la première pièce 42 se répartit de manière équilibrée sur les deux pièces 44.1, 44.2, i.e. sur les zones de contact des deux pistons. La plaquette de frein intérieure P1 reçoit des efforts de poussée équilibrés au niveau des deux zones de contact des pistons. La plaquette intérieure voit donc les forces de poussée appliquées par deux pistons.

Des moyens de solidarisation axiale sont prévus entre le piston et le dispositif intercalaire de sorte que, lors du recul du piston, la plaquette intérieure P1 s'écarte du disque. Les moyens de solidarisation axiale sont tels qu'ils forment une articulation entre le piston et le dispositif intercalaire, cette articulation étant avantageusement une liaison rotule entre le piston et le dispositif intercalaire. En outre ils peuvent présenter un jeu radial de sorte à supporter le mouvement de la plaquette de frein P1 sous couple lors d'une phase de freinage classique.

Dans l'exemple représenté et de manière très avantageuse, les moyens de solidarisation axiale comportent un logement 52 formé dans la première pièce 40 et muni d'une fenêtre 54 s'ouvrant dans la face amont, le logement s'ouvre également vers la voûte de l'étrier. Les dimensions de la fenêtre 54 dans un plan orthogonal à l'axe X sont inférieures à celle du logement 52 de sorte que, vu de l'intérieur du logement 52, la fenêtre 54 est bordée par un rebord 56.

Le piston comporte un élément de connexion 58 faisant saillie axialement de la face 26. L'élément de connexion 58 comporte une tête 60 connectée au nez par une tige 61 de dimension transversale inférieure à celles de la tête 60 et de la fenêtre 54. Les dimensions transversales de la tête 60 sont quant à elles supérieures à celles de la fenêtre 54 et inférieures à celle du logement 52.

Lorsque la tête 60 est insérée dans le logement 52 par son ouverture supérieure par coulissement, la tige 61 coulisse dans la fenêtre 54. La tête 60 coopère avec le rebord 56 et solidarise axialement le piston et le dispositif intercalaire au moins dans un déplacement de l'aval vers l'amont, tout en offrant une aptitude au rotulage entre le piston et la première pièce. En outre, un jeu est prévu entre l'élément de connexion 58 et le logement et la fenêtre de la première pièce 40.

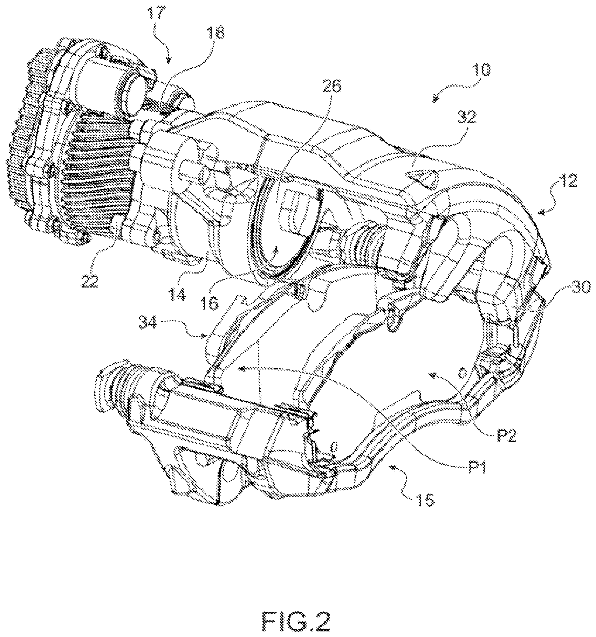

Ces moyens de solidarisation axiale sont particulièrement avantageux car ils assurent une solidarisation automatique du piston et du dispositif intercalaire lorsque l'étrier de frein est pivoté autour d'une de ses colonnettes C1 pour refermer le frein, comme cela est illustré par les figures 1, 2, 3. Lorsque l'étrier pivote, l'élément de connexion 58 se rapproche du logement 52 (figure 2) jusqu'à pénétrer dans celui-ci. Ainsi ces moyens permettent de ne pas nécessiter de solidariser le piston et le dispositif intercalaire ultérieurement.

En variante l'élément de connexion 58 est porté par la première pièce et le logement est formé dans le piston.

Tout autre moyen de solidarisation entre la première pièce et le piston offrant une certaine aptitude au rotulage et pouvant offrir un jeu radial sont envisageables.

Dans l'exemple représenté, les rotules des liaisons rotules sont montées dans la deuxième pièce. En variante les rotules de liaisons rotules sont montées dans la première pièce.

En variante, le dispositif de transfert est solidaire du piston de manière imperdable lors du montage du piston dans le corps d'étrier.

Le dispositif intercalaire est avantageusement réalisé dans un acier traité, de préférence le même acier que celui du piston.

Le fonctionnement du frein à disque selon l'invention va maintenant être décrit.

Lors d'une action de freinage en cours de roulage, le disque de frein est alors en rotation, le piston est déplacé axialement en direction du disque. Le piston applique un effort de poussée à la première pièce 40 qui le transmet aux deux deuxièmes pièces 42 en le répartissant de manière équilibrée entre les deux parties 44.1, 44.2 du fait du montage de type palonnier. L'effort de poussée est ainsi réparti sur la plaquette de frein. Avantageusement la plaquette se déplace axialement, un plan de la face avant restant parallèle au plan du disque. Les deux deuxièmes pièces coulissent par rapport à la chape avec la plaquette de frein intérieure, les branches coulissant dans les rainures. Par réaction, l'étrier coulisse et le nez d'étrier pousse la plaque extérieure vers le disque de frein.

A la fin de la phase de freinage, le piston recule emmenant avec lui le dispositif intercalaire via la coopération de l'élément de connexion 58 et du logement 52, et les plaquettes de frein sont guidées en translation par les ressorts R1, R2.

Lors de l'application du frein de parking, le disque de frein est généralement immobile, l'actionneur électromécanique est activé pour faire coulisser le piston en direction du disque. Le piston applique un effort de poussée à la première pièce 40 qui le transmet aux deux deuxième pièces 42 en le répartissant de manière équilibrée entre les deux parties 44.1, 44.2 du fait du montage de type palonnier. L'effort de poussée est ainsi réparti sur la plaquette de frein. Les deux deuxièmes pièces 42.1, 42.2 coulissent par rapport à la chape 15 avec la plaquette de frein intérieure P1, les branches coulissant dans les rainures. Par réaction, l'étrier 12 coulisse et le nez d'étrier pousse la plaquette de frein extérieure P2 vers le disque de frein.

A la fin de la phase de freinage de parking, l'actionneur électromécanique 17 est commandé pour ramener le piston dans l'étrier, le piston coulisse axialement en éloignement du disque emmenant avec lui le dispositif intercalaire via la coopération de l'élément de connexion 58 et du logement 52, et les plaquettes de frein sont guidées en translation axiale par les ressorts R1, R2.

Un exemple de procédé de fabrication du frein des figures 1 à 3 va maintenant être décrit.

Lors d'une première étape on fabrique un étrier comportant un corps comprenant un logement pour un piston et un actionneur électromécanique et une voûte d'un frein à disque bi-piston. Un piston muni d'un élément de connexion 58 est monté dans le logement. On fabrique également une chape d'un frein bi-piston.

On assemble l'étrier et la chape en montant une colonnette C1. L'étrier est disposé en position relevée comme sur la figure 1
On monte des plaquettes de frein intérieure P1 et extérieure P2 d'un frein bi-piston dans la chape.

On monte le dispositif intercalaire contre le support de plaquette de la plaquette de frein intérieure, et faisant coulisser les extrémités libres des branches des deuxièmes pièces dans les ressorts montés dans les rainures.

On fait pivoter l'étrier vers le bas, la tête 60 de l'élément de connexion 58 pénètre dans le logement 52 et la tige 61 coulisse dans la fenêtre 54. Le piston et le dispositif intercalaire sont assemblés.

La deuxième colonnette C2 est mise en place.

Le frein à disque est prêt à être monté sur un porte-fusée d'un véhicule automobile.

L'ajout du dispositif intercalaire complexifie peu le procédé de fabrication du frein et le procédé de remplacement des plaquettes de frein.

Dans l'exemple représenté, les deuxièmes pièces reproduisant l'appui des pistons sur les plaquettes de frein sont de forme circulaire, qui est la forme classique d'un piston de frein à disque.

L'ajout du dispositif intercalaire offre un degré de liberté supplémentaire en ce qui concerne le choix de la forme et des dimensions des zones d'applications des efforts de poussée. Les deuxièmes pièces peuvent avoir ont toute forme ou toute section adaptée pour répartir au mieux les efforts de freinage sur la plaquette de frein, par exemple les deux pièces ont des surfaces différentes et/ou des formes différentes en fonction des contraintes subies par les différents zones de la plaquette de frein.

En variante, les deuxièmes pièces sont fixées de manière amovible à la plaquette de frein intérieure P1, de sorte à être solidaire axialement de celle-ci. Le dispositif intercalaire est alors remplacé à chaque changement de plaquette ou non.

En variante encore, les deuxièmes pièces sont fixées de manière définitive sur le support de plaquette. Ainsi l'invention concerne également une plaquette de frein comportant un dispositif intercalaire assurant une répartition de l'effort de poussée en au moins deux zones décalée transversalement de la face amont de la plaquette de frein intérieure. Le dispositif intercalaire est alors remplacé à chaque changement de plaquette.

Dans un autre exemple de réalisation, le dispositif intercalaire permet la répartition de l'effort de poussée exercé par le piston en plus de deux zones, par exemple en quatre zones, les centres des quatre zones étant par exemple les sommets d'un rectangle.

Le dispositif intercalaire selon l'invention offre l'avantage de permettre d'utiliser l'actionneur électromécanique monopiston des freins à disque, ainsi la réalisation de freins à disque ayant une section d'appui identique à un frein bi-piston voire à plus de deux pistons est simplifiée et ne nécessite pas de redévelopper un actionneur électromécanique permettant le déplacement de deux pistons, voire plus. En outre la masse et l'encombrement sont sensiblement réduits par rapport à un actionneur électromécanique permettant le déplacement de deux pistons, voire plus. De plus la présente invention permet de réaliser des sections d'appui variable en fonction d'appui pour une plaquette, par exemple pour compenser l'usure différentielle.

En outre, l'invention s'applique également à un frein à disque dont l'actionneur comporte plusieurs pistons, par exemple deux et permettant de répartir les efforts de poussée des deux pistons sur une plaquette de frein de grandes dimensions, notamment pour une plaquette de longueur importante.

Le dispositif intercalaire est particulièrement avantageux dans le cas d'un frein à disque à commande électromécanique, intégrant ou non un frein de parking. Mais il sera compris que le dispositif intercalaire peut s'appliquer à un frein à disque intégrant un frein de parking à commande mécanique, par exemple par câble, et également frein à disque hydraulique avec ou sans fonction frein de parking.

En outre, l'invention a été décrite dans le cadre d'un frein à disque coulissant, dit frein à étrier flottant, mais l'application à un frein à disque fixe, i.e. comportant au moins un piston par plaquette de frein ne sort pas du cadre de la présente invention.

### REFERENCES

10 frein à disque
12 étrier
14 boîtier arrière
15 chape
16 piston
17 actionneur électromécanique
18 boîtier de l'actionneur
19 gorges
22 vis
26 face aval du piston
27 face amont du piston
29 vis
30 nez d'étrier
32 voûte
34 dispositif intercalaire
36 côte amont du dispositif intercalaire
38 côté aval du dispositif intercalaire
40 première pièce
42.1, 42.2 deuxièmes pièces
44.1, 44.2 première partie
46.1, 46.2 branches
48.1, 48.2 extrémités latérales libres
50.1, 50.2 liaisons rotules
52 logement
54 fenêtre
56 rebord
58 élément de connexion
60 tête
61 tige
C1 première colonnette
C2 deuxième colonnette
P1 première plaquette de frein
P2 deuxième plaquette de frein
P2.1, P2.2 oreilles
R1, R2 ressorts
X axe de coulissement du piston 16

## Revendications

1. Dispositif intercalaire (34) pour un frein à disque, le dispositif intercalaire étant destiné à être interposé entre un piston du frein à disque et un support de plaquette de frein intérieure, comportant une première pièce (40) et au moins deux deuxièmes pièces (42.1, 42.2) , une première liaison rotule (50.1, 50.2) entre la première pièce (40) et chaque deuxième pièce (42.1, 42.2), dans lequel ladite première pièce (40) est configurée pour être solidarisée au piston par une deuxième liaison rotule et dans lequel lesdites deuxièmes pièces (42.1, 42.2) sont destinées à venir en appui contre un support de plaquette d'une plaquette de frein.

2. Dispositif intercalaire selon la revendication précédente, dans lequel chaque deuxième pièce (42.1, 42.2) comporte une surface pour transmettre un effort de poussée au support de plaquette et une portion destinée à coopérer avec la chape pour assurer son guidage dans la chape.

3. Plaquette de frein comportant un support de plaquette et un matériau de friction et un dispositif intercalaire selon la revendication 1 ou 2, fixé à une face du support de plaquette de frein opposée à celle portant le matériau de friction.

4. Frein à disque comportant une chape (15), au moins une première plaquette de frein (P1) montée coulissante dans la chape (15), ladite première plaquette de frein (P1) comportant un support de plaquette et un matériau de friction, un étrier (12) comportant au moins un piston (16) monté coulissant dans l'étrier (12) de sorte à déplacer la première plaquette de frein (P1) par rapport à la chape (15), au moins un actionneur (17) configuré pour déplacer axialement le piston (16), **caractérisé en ce que** le frein à disque comprend un dispositif intercalaire (34) selon la revendication 1 ou la revendication 2, le dispositif intercalaire (34) interposé entre le piston (16) et la première plaquette de frein (P1) formant un palonnier de sorte à répartir l'effort de poussée exercé par le piston (16) sur au moins deux zones de la première plaquette de frein (P1), au moins en partie distinctes de la projection du piston sur la première plaquette de frein (P1).

5. Frein à disque selon la revendication 4, dans lequel la chape (15) comporte au moins deux rainures de guidage (19) de deux oreilles de ladite première plaquette de frein et dans lequel les deuxièmes pièces (42.1, 42.2) comportent chacune une branche (46.1, 46.2) dont une extrémité libre (48.1, 48.2) est montée dans une desdites rainures (19).

6. Frein à disque selon l'une quelconque des revendications 4 à 5, dans lequel la liaison rotule ente la première pièce (40) et le piston (16) comporte un premier élément solidaire du piston et un deuxième élément solidaire de la première pièce, le premier élément ou le deuxième élément pénétrant dans le deuxième élément ou le premier élément respectivement, de sorte à former une liaison rotule entre le piston et le dispositif intercalaire et assurer un solidarisation axiale entre le piston et le dispositif intercalaire au moins lorsque le piston rentre dans l'étrier.

7. Frein à disque selon l'une des revendications 4 à 6, dans lequel les au moins deux zones sont décalées l'une par rapport à l'autre transversalement.

8. Frein à disque selon l'une des revendications 4 à 7, dans lequel les au moins deux zones ont une forme circulaire.

9. Frein à disque selon la revendication 8, dans lequel les premières liaisons rotules (50.1, 50.2) étant agencées de sorte que leur projection sur la première plaquette de frein soit au centre desdites zones.

10. Frein à disque selon l'une des revendications 4 à 9, comportant une deuxième plaquette de frein (P2), une première colonnette (C1) et une deuxième colonnette (C2) permettant un coulissement entre l'étrier (12) et la chape (15), au moins la deuxième colonnette (C2) permettant la rotation de l'étrier autour de la première colonnette (C1), et dans lequel l'étrier (12) comporte une voûte (32) et un nez (30) destiné à appliquer un effort sur la deuxième plaquette de frein (P2).

11. Frein à disque selon la revendication précédente en combinaison avec la revendication 6, dans lequel l'un des premier et deuxième éléments comporte un logement (52) s'ouvrant vers la voûte de l'étrier et une fenêtre (54) s'ouvrant vers le deuxième élément ou le premier élément respectivement, et le deuxième ou le premier élément comporte un tête (60) et une tige (61), la tête (60) étant dimensionnée pour pénétrer dans le logement (52), et pour former une butée axiale entre le piston (16) et le dispositif intercalaire (34).

12. Frein à disque selon l'une des revendications précédentes 4 à 11, dans lequel l'étrier (12) comporte un piston (16) et un actionneur (17) dudit piston (16), et dans lequel la chape (15) et la première plaquette de frein (P1) ont les dimensions d'une plaquette de frein d'un frein à disque bi-piston.

13. Frein à disque selon l'une des revendications précédentes 4 à 12, dans lequel l'actionneur (17) est un actionneur électromécanique.

14. Procédé de fabrication d'un frein à disque à étrier coulissant selon la revendication 10 ou 11, comportant :
- la fabrication d'un étrier comportant un corps comprenant un logement pour un piston et un actionneur électromécanique et une voûte d'un frein à disque bi-piston,
- la fabrication d'un piston muni d'un élément de connexion,
- le montage dudit piston dans le logement du corps d'étrier,
- la fabrication d'une chape d'un frein bi-piston,
- l'assemblage de l'étrier et de la chape en montant une colonnette entre la chape et l'étrier,
- la mise en position relevée de l'étrier,
- le montage des plaquettes de frein intérieur et extérieur d'un frein bi-piston dans la chape,
- la fabrication d'un dispositif intercalaire,
- le montage du dispositif intercalaire contre le support de plaquette de la plaquette de frein intérieure,
- le pivotement de l'étrier vers la chape, l'élément de connexion du piston coopérant avec la première pièce du dispositif intercalaire,
- la mise en place de la deuxième colonnette entre la chape et l'étrier.

## Patentansprüche

1. Abstandshaltevorrichtung (34) für eine Scheibenbremse, wobei die Abstandshaltevorrichtung dazu bestimmt ist, zwischen einen Kolben der Scheibenbremse und einem inneren Bremsbelagträger eingefügt zu werden, umfassend ein erstes Bauteil (40) und mindestens zwei zweite Bauteile (42.1, 42.2), ein erstes Kugelgelenk (42.1, 42.2) zwischen dem ersten Bauteil (40) und jedem zweiten Bauteil (42.1, 42.2), wobei das erste Bauteil (40) dazu konfiguriert ist, durch ein zweites Kugelgelenk am Kolben befestigt zu werden, und wobei die zweiten Bauteile (42.1, 42.2) dazu bestimmt sind, auf einem Belagträger eines Bremsbelags in Anlage zu kommen.

2. Abstandshaltevorrichtung nach dem vorhergehenden Anspruch, wobei jedes zweite Bauteil (42.1, 42.2) eine Oberfläche zum Übertragen einer Schubkraft auf den Belagträger und einen Abschnitt umfasst, der dazu bestimmt ist, mit dem Gabelkopf zusammenzuwirken, um seine Führung in dem Gabelkopf zu gewährleisten.

3. Bremsbelag, die einen Belagträger und ein Reibungsmaterial und eine Abstandshaltevorrichtung nach Anspruch 1 oder 2 umfasst, die an einer Fläche des Bremsbelagsträgers fixiert ist, die derjenigen gegenüberliegt, die das Reibungsmaterial trägt.

4. Scheibenbremse, umfassend einen Gabelkopf (15), mindestens einen ersten Bremsbelag (P1), der im Gabelkopf (15) verschiebbar angebracht ist, wobei der erste Bremsbelag (P1) einen Belagträger und ein Reibungsmaterial umfasst, einen Bremssattel (12), der mindestens einen Kolben (16) umfasst, der in dem Bremssattel (12) verschiebbar angebracht ist, um den ersten Bremsbelag (P1) im Verhältnis zum Gabelkopf (15) zu bewegen, mindestens ein Stellglied (17), das so konfiguriert ist, dass er den Kolben (16) axial bewegt, **dadurch gekennzeichnet, dass** die Scheibenbremse eine Abstandshaltevorrichtung (34) nach Anspruch 1 oder Anspruch 2 umfasst, wobei die Abstandshaltevorrichtung (34) zwischen dem Kolben (16) und dem ersten Bremsbelag (P1) eingefügt ist und eine Bremsausgleichsvorrichtung bildet, um die vom Kolben (16) ausgeübte Schubkraft auf mindestens zwei Bereiche des ersten Bremsbelags (P1) zu verteilen, die sich mindestens teilweise von dem Vorsprung des Kolbens auf den ersten Bremsbelag (P1) unterscheiden.

5. Scheibenbremse nach Anspruch 4, wobei der Gabelkopf (15) mindestens zwei Führungsnuten (19) für zwei Laschen des ersten Bremsbelags umfasst und wobei die zweiten Bauteile (42.1, 42.2) jeweils einen Zweig (46.1, 46.2) umfassen, dessen eines freies Ende (48.1, 48.2) in einer der Nuten (19) angebracht ist.

6. Scheibenbremse nach einem der Ansprüche 4 bis 5, wobei das Kugelgelenk zwischen dem ersten Bauteil (40) und dem Kolben (16) ein erstes Element, das fest mit dem Kolben verbunden ist, und ein zweites Element umfasst, das fest mit dem ersten Bauteil verbunden ist, wobei das erste Element oder das zweite Element in das zweite Element bzw. das erste Element eindringt, um ein Kugelgelenk zwischen dem Kolben und der Abstandshaltevorrichtung zu bilden und eine axiale Verbindung zwischen dem Kolben und der Abstandshaltevorrichtung zumindest dann zu gewährleisten, wenn der Kolben in den Bremssattel zurückkehrt.

7. Scheibenbremse nach einem der Ansprüche 4 bis 6, wobei die mindestens zwei Bereiche quer zueinander versetzt sind.

8. Scheibenbremse nach einem der Ansprüche 4 bis 7, wobei die mindestens zwei Bereiche eine Kreisform haben.

9. Scheibenbremse nach Anspruch 8, wobei die ersten Kugelgelenke (50.1, 50.2) derart angeordnet sind, dass ihr Vorsprung auf dem ersten Bremsbelag in der Mitte der Bereiche liegt.

10. Scheibenbremse nach einem der Ansprüche 4 bis 9, umfassend einen zweiten Bremsbelag (P2), einen ersten Führungsbolzen (C1) und einen zweiten Führungsbolzen (C2), der ein Gleiten zwischen dem Bremssattel (12) und dem Gabelkopf (15) ermöglicht, wobei mindestens der zweite Führungsbolzen (C2) die Drehung des Bremssattels um den ersten Führungsbolzen (C1) ermöglicht, und wobei der Bremssattel (12) ein Gewölbe (32) und eine Nase (30) umfasst, die dazu bestimmt ist, eine Kraft auf den zweiten Bremsbelag (P2) auszuüben.

11. Scheibenbremse nach dem vorhergehenden Anspruch in Kombination mit Anspruch 6, wobei eines des ersten und des zweiten Elements eine Aufnahme (52), die sich in Richtung des Gewölbes des Bremssattels öffnet, und ein Fenster (54) umfasst, das sich in Richtung des zweiten Elements bzw. des ersten Elements öffnet, und das zweite oder das erste Element einen Kopf (60) und eine Stange (61) umfasst, wobei der Kopf (60) so bemessen ist, dass er in die Aufnahme (52) eindringt und einen axialen Anschlag zwischen dem Kolben (16) und der Abstandshaltevorrichtung (34) bildet.

12. Scheibenbremse nach einem der vorhergehenden Ansprüche 4 bis 11, wobei der Bremssattel (12) einen Kolben (16) und ein Stellglied (17) des Kolbens (16) umfasst, und wobei der Gabelkopf (15) und der erste Bremsbelag (P1) die Abmessungen eines Bremsbelags einer Doppelkolben-Scheibenbremse aufweisen.

13. Scheibenbremse nach einem der vorhergehenden Ansprüche 4 bis 12, wobei das Stellglied (17) ein elektromechanisches Stellglied ist.

14. Verfahren zum Herstellen einer Bremssattel-Scheibenbremse nach Anspruch 10 oder 11, umfassend:
- Herstellen eines Bremssattels, der einen Körper umfasst, der eine Aufnahme für einen Kolben und ein elektromechanisches Stellglied sowie eine Gewölbe für eine Doppelkolben-Scheibenbremse umfasst,
- Herstellen eines Kolbens, der mit einem Verbindungselement versehen ist,
- Anbringen des Kolbens in der Aufnahme des Bremssattelkörpers,
- Herstellen eines Gabelkopfs einer Doppelkolbenbremse,
- Montieren des Bremssattels und des Gabelkopfs durch Anbringen eines Führungsbolzens zwischen dem Gabelkopf und dem Bremssattel,
- Bringen des Bremssattels in eine angehobene Position,
- Anbringen des inneren und des äußeren Bremsbelags einer Doppelkolbenbremse in dem Gabelkopf,
- Herstellen einer Abstandshaltevorrichtung,
- Anbringen der Abstandshaltevorrichtung auf dem Belagträger des inneren Bremsbelags,
- Schwenken des Bremssattels in Richtung des Gabelkopfs, wobei das Verbindungselement des Kolbens mit dem ersten Bauteil der Abstandshaltevorrichtung zusammenwirkt,
- Installieren des zweiten Führungsbolzens zwischen dem Gabelkopf und dem Bremssattel.

## Claims

1. An interposed device for a disc brake, the interposed device being intended to be interposed between a piston of a disc brake and an internal brake pad support, comprising a first piece (40) and at least two second pieces (42.1, 42.2), a first ball joint (50.1, 50.2) between the first piece (40) and each second piece (42.1, 42.2), wherein said first piece (40) is configured to be secured to the piston by a second ball joint and wherein said second pieces (42.1, 42.2) are to be pressed against a pad support of a brake pad.

2. The interposed device according to the preceding claim, wherein each second piece (42.1, 42.2) comprises a surface for transmitting a thrust force to the pad support and a portion for cooperating with the carrier to ensure its guidance in the carrier.

3. A brake pad comprising a pad support and friction material and an interposed device according to claim 1 or 2, attached to a face of the brake pad support opposite to that carrying the friction material.

4. A disc brake comprising a carrier (15), at least one first brake pad (P1) slidably mounted in the carrier (15), said first brake pad (P1) comprising a pad support and a friction material, a caliper (12) comprising at least one piston (16) slidably mounted in the caliper (12) so as to move the first brake pad (P1) relative to the carrier (15), at least one actuator (17) configured to move the piston (16) axially, and an interposed device (34) according to claim 1 or 2, the interposed device being interposed between the piston (16) and the first brake pad (P1) forming a spreader so as to distribute the thrust force exerted by the piston (16) over at least two zones of the first brake pad (P1), at least partly distinct from the projection of the piston onto the first brake pad (P1).

5. The disc brake according to claim 4, wherein the carrier (15) comprises at least two guide grooves (19) for guiding two lugs of said first brake pad and wherein the second pieces (42.1, 42.2) each comprise a branch (46.1, 46.2), a free end (48.1, 48.2) of which is mounted into one of said grooves (19).

6. The disc brake according to any one of claims 4 to 5, in which the ball joint between the first piece (40) and the piston (16) comprises a first element integral with the piston and a second element integral with the first piece, the first element or the second element penetrating into the second element or the first element respectively, so as to form a ball joint between the piston and the interposed device and to ensure axial securement between the piston and the interposed device at least when the piston enters the caliper.

7. The disc brake according to any one of claims 4 to 6, in which the at least two zones are transversely offset in relation to each other.

8. The disc brake according to any of claims 4 to 7 in which the at least two zones have a circular shape.

9. The disc brake according to claim 8, in which the first ball joints (50.1, 50.2) are arranged so that their projection on the first brake pad is in the centre of said zones.

10. The disc brake according to any one of the claims 4 to 9, comprising a second brake pad (P2), a first guide pin (C1) and a second guide pin (C2) allowing sliding between the caliper (12) and the carrier (15), at least the second guide pin (C2) allowing rotation of the caliper about the first guide pin (C1), and wherein the caliper (12) comprises an arch (32) and a nose (30) intended for applying a force to the second brake pad (P2).

11. The disc brake according to the preceding claim in combination with claim 6, wherein one of the first and second elements comprises a housing (52) opening towards the arch of the caliper and a window (54) opening towards the second element or the first element respectively, and the second or first element comprises a head (60) and a rod (61), the head (60) being dimensioned to penetrate the housing (52), and to form an axial stop between the piston (16) and the interposed device (34).

12. The disc brake according to one of the preceding claims 4 to 11, wherein the caliper (12) comprises a piston (16) and an actuator (17) of said piston (16), and wherein the carrier (15) and the first brake pad (P1) have dimensions of a brake pad of a dual-piston disc brake.

13. The disc brake according to one of the preceding claims 4 to 12, wherein the actuator (17) is an electromechanical actuator.

14. A method for manufacturing a sliding caliper disc brake according to claim 10 or 11, comprising:
- manufacturing a caliper comprising a body comprising a housing for a piston and an electromechanical actuator and an arch of a dual-piston disc brake,
- manufacturing a piston with a connecting element,
- mounting said piston in the housing of the caliper body,
- manufacturing a carrier of a dual-piston brake,
- assembling the caliper and the carrier by mounting a guide pin between the carrier and the caliper,
- placing the caliper into a raised position,
- mounting the internal and external brake pads of a dual-piston brake into the carrier,
- manufacturing an interposed device,
- mounting the interposed device against the internal brake pad support,
- pivoting the caliper towards the carrier, with the connecting element of the piston cooperating with the first part of the interposed device,
- installing the second guide pin between the carrier and the caliper.
